(19) Europäisches Patentamt
European Patent Office
Office européen des brevets

(11) **EP 3 553 210 B1**

(12) **EUROPÄISCHE PATENTSCHRIFT**

(45) Veröffentlichungstag und Bekanntmachung des Hinweises auf die Patenterteilung:
**08.09.2021 Patentblatt 2021/36**

(51) Int Cl.:
*C25D 21/12* (2006.01)          *C25F 3/00* (2006.01)
*G01N 27/26* (2006.01)          *G01N 27/30* (2006.01)
*G01N 27/42* (2006.01)          *C25D 3/22* (2006.01)
*C25D 3/56* (2006.01)          *G01N 13/00* (2006.01)
*G01N 15/08* (2006.01)

(21) Anmeldenummer: **18166989.6**

(22) Anmeldetag: **12.04.2018**

(54) **VERFAHREN UND VERWENDUNG EINER VORRICHTUNG ZUR ELEKTROCHEMISCHEN MESSUNG VON WASSERSTOFFPERMEATION**

METHOD AND USE OF A DEVICE FOR ELECTROCHEMICAL MEASUREMENT OF HYDROGEN PERMEATION

PROCÉDÉ ET UTILISATION D'UN DISPOSITIF DE MESURE ÉLECTROCHIMIQUE DE PERMÉATION DE L'HYDROGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.10.2019 Patentblatt 2019/42**

(73) Patentinhaber:
• **Dr.Ing. Max Schlötter GmbH & Co. KG**
**73312 Geislingen (DE)**
• **Gaskatel Gesellschaft für Gassysteme durch Katalyse und Elektrochemie mbH**
**34127 Kassel (DE)**
• **Dr. Riedel Ingenieurbüro für Werkstofftechnik**
**32825 Blomberg (DE)**

(72) Erfinder:
• **Lipp, Vera**
**73457 Essingen (DE)**
• **Krauß, Ralph**
**73560 Böbingen (DE)**
• **Dr. Zöllinger, Michael**
**73084 Salach (DE)**
• **Dr. Kohnke, Hans-Joachim**
**34127 Kassel (DE)**
• **Dr. Riedel, Jens Uwe**
**32825 Blomberg (DE)**

(74) Vertreter: **Hoffmann Eitle**
**Patent- und Rechtsanwälte PartmbB**
**Arabellastraße 30**
**81925 München (DE)**

(56) Entgegenhaltungen:
**EP-A1- 2 886 681          EP-A2- 0 994 347**
**WO-A1-2015/090571**

• **J.P.D. CARVALHO ET AL: "A critical review and experimental analysis of the equation recommended by ASTM G148-97 and ISO 17081: 2004 for the calculation of the hydrogen diffusivity in metals and alloys",** INTERNATIONAL JOURNAL OF HYDROGEN ENERGY., Bd. 42, Nr. 1, 13. November 2016 (2016-11-13), Seiten 681-688, XP055509000, GB ISSN: 0360-3199, DOI: 10.1016/j.ijhydene.2016.10.127

## Beschreibung

### Technisches Gebiet

Die vorliegende Erfindung betrifft ein Verfahren zur elektrochemischen Messung von Wasserstoffpermeation durch ein metallisches oder ein metallisiertes Werkstück unter Einsatz einer Doppelzelle. Des Weiteren betrifft die Erfindung die Verwendung einer entsprechenden Vorrichtung zur Durchführung des Verfahrens.

### Technischer Hintergrund

Aufgrund von immer effizienterem Einsatz von Rohstoffen in Kombination von stetig steigenden Sicherheitsanforderungen werden - insbesondere im Automobilbereich - zunehmend hochfeste Stähle eingesetzt. Durch den intensiveren Einsatz von höherfesten Stählen ($R_m \geq 800$ MPa) steigt das Bauteilrisiko sowohl nach der elektrochemischen Beschichtung als auch im Betrieb durch Wasserstoffversprödung zu versagen.

Wasserstoffversprödung ist eine Systemeigenschaft. Der Werkstoff muss eine Anfälligkeit aufweisen, diese ist unter anderem von der chemischen Zusammensetzung, dem Gefügezustand, der Bauteilfestigkeit, dem Reinheitsgrad und dem Oberflächenzustand abhängig. Weiter ist eine kritische lokale Wasserstoffkonzentration im Werkstoff notwendig. Wasserstoff kann fertigungsbedingt als auch umgebungsbedingt bzw. betriebsbedingt in den Werkstoff eingetragen werden. In Kombination mit einer auftretenden mechanischen Belastung (z.B. betriebsbedingte Zugspannungen, Eigenspannungen oder auch Belastungsänderungen) und einem kritischen Werkstoffzustand kann dieser zu einer Schädigung des Bauteils führen.

Bei der Stahlherstellung sowie beim Schweißen und Härten als auch bei diversen Vorbehandlungs- bzw. Beschichtungsverfahren kann Wasserstoff entstehen, der dann als fertigungsbedingter Wasserstoff bezeichnet wird. Zum Korrosionsschutz der oben genannten Stähle werden häufig galvanische Schichtsysteme z.B. Zink oder Zink-Legierungen aufgebracht. Innerhalb einer galvanischen Prozesskette entsteht zwangsläufig an der Metalloberfläche, durch eine chemische (z.B. Beizen) oder elektrochemische (z.B. galvanischen Abscheidung) Reaktion Wasserstoff, der atomar in den Werkstoff eindringen kann. Auch beim Entschichten von fehlerhaft beschichteten Bauteilen in einer Beize kann es zu einer starken Wasserstoffentwicklung kommen. Bei der Fertigung kann innerhalb kurzer Zeit ein hoher Wasserstoffeintrag stattfinden, der nach kurzer Belastungsdauer bereits Auswirkungen zeigen kann.

Aus den Systemeigenschaften allein kann keine Schlussfolgerung bezüglich Wasserstoffversprödungsgefahr gezogen werden. Durch eine geeignete Wärmebehandlung nach der Beschichtung kann jedoch der Wasserstoffgehalt durch Effusionsprozesse auf ein unkritisches Niveau abgesenkt werden.

Als umgebungsbedingten bzw. betriebsbedingten Wasserstoff wird der Wasserstoff bezeichnet, der nach dem Fertigungsprozess z.B. während des Korrosionsprozesses durch Oxidation des Metalls gebildet wird. Der Wasserstoffeintrag ist geringer, kann jedoch nach längeren Zeiträumen ebenfalls eine kritische Konzentration erreichen.

Deshalb sind für die Bewertung von chemischen und elektrochemischen Prozessen, bei denen zwangsläufig Wasserstoff entstehen kann, Kenntnisse bezüglich dessen Aufnahme und Transport durch einen bestimmten Werkstoff unabdingbar. Verfahren, die Rückschlüsse auf das fertigungsbedingte bzw. auch umgebungsbedingte Wasserstoff-Gefährdungspotential bestimmter Werkstoffe erlauben, sind daher von großer Bedeutung.

### Literatur

Im Stand der Technik gibt es einige Standardmethoden zur Messung von Wasserstoffdiffusion und zur Bestimmung von Wasserstoffaufnahme und Wasserstofftransport in Metallen:M. A. V. Devanathan, Z. Stachurski, "The Mechanism of Hydrogen Evolution on Iron in Acid Solutins by Determination of Permeation Rates", J. Electrochem. Society, Vol. 111, No. 5, 1964, Seite 619 - 623, beschreiben eine Doppelzelle zur Messung der Wasserstoffdiffusion. Diese Doppelzelle, auch als "Devanathan-Stachurski-Zelle" bezeichnet, besteht aus zwei Zellen, die beide mit Elektrolyt gefüllt sind, und die mit einer Membran (zu testendes Werkstück) voneinander getrennt sind. In einer Zelle wird Wasserstoff durch eine kathodische Polarisation elektrochemisch erzeugt. Der Wasserstoff wird dann an der Probenoberfläche der Membran adsorbiert und diffundiert atomar in die Membran ein. In der anderen Zelle wird dann der Wasserstoff, der durch die Probe diffundiert ist, bei einem konstanten Potential oxidiert und der Strom gemessen. Der Oxidationsstrom ist direkt proportional zur Menge an diffundiertem Wasserstoff.

ASTM G148-97 (2003) "Standard Practice for Evaluation of Hydrogen Uptake, Permeation, and Transport in Metals by an Electrochemical Technique" ist eine Norm zur Bewertung der Wasserstoffaufnahme, der Permeationsrate sowie des Transports von Wasserstoff durch eine metallische Membran. Angewendet wird eine elektrochemische Messzelle bzw. Prüfzelle nach Devanathan-Stachurski. Für die Beladung wird ein Konstantstrom von 1 mA/cm$^2$ empfohlen. Die anodische Wasserstoffoxidation wird bei einem konstanten Potential von +0,3 V vs. SCE (Kalomelelektrode, gesättigt) durchgeführt. Das Oxidationspotential muss so gewählt werden, dass die Kinetik für die Oxidation von Wasserstoff durch den Massentransport durch die Membran begrenzt wird. Deshalb muss in einem Vorversuch das Oxidationspotential ermittelt werden, bei dem der Oxidationsstrom am größten ist. Generell nimmt mit zunehmendem Oxidationspotential auch der Oxidationsstrom zu. Im Idealfall sollte der Strom bei einer transportbegrenzenden Kinetik nach einer Zunahme auf einen stationären Wert abfallen, der dem Stromwert vor der Potentialänderung entspricht. Wenn der stationäre Strom bei dem neuen Potential signifikant höher liegt, dann sollte das Potential langsam erhöht werden, bis ein zunehmender Strom messbar ist, der vom Potential unabhängig ist. So kann das ideale Oxidationspotential bestimmt werden. Mit dieser Methode kann der Wasserstofftransport bzw. die Permeationsrate durch eine metallische Membran bestimmt werden. Diese ASTM dient zur Charakterisierung einer metallischen Membran, nicht zur Bestimmung der Menge an diffundiertem Wasserstoff während eines elektrochemischen oder chemischen Verfahrens.

DIN EN ISO 17081 "Elektrochemisches Verfahren zur Messung der Wasserstoffpermeation und zur Bestimmung von Wasserstoffaufnahme und -transport in Metallen" ist eine Norm zur Bestimmung der Diffusionsgeschwindigkeit von Wasserstoff durch eine metallische Probe. Angewendet wird eine elektrochemische Messzelle bzw. Prüfzelle nach Devanathan-Stachurski. Hier wird auf der Oxidationsseite jedoch ein Elektrodenpotential aufgebracht und der sich einstellende Oxidationsstrom gemessen. Das Elektrodenpotential der Probe in der Oxidations-Messzelle wird auf einen Wert eingestellt, der ausreichend positiv ist, um sicherzustellen, dass die Kinetik der Oxidation der Wasserstoffatome durch die Strömung der Wasserstoffatome begrenzt wird, also die Stromdichte des Oxidationsstroms der Wasserstoffatome transportbegrenzt ist.

Hier geht es rein um die Bestimmung der Diffusionsgeschwindigkeit durch eine metallische Membran. Um das Bezugspotential für das System festzulegen, ist eine Vorprüfung durchzuführen, vorzugsweise unter den Prüfbedingungen, bei denen der Oxidationsstrom am größten ist. Das Bezugspotential auf der Oxidationsseite wird unter Beobachtung des Stroms erhöht. Falls der konstante Strom beim neuen Potential signifikant höher ist, wird das Elektrodenpotential progressiv erhöht, bis Potentialunabhängigkeit des statischen Stroms bei jedem Potential erreicht ist. Anfangs gibt es eine Erhöhung des Stroms, die sich jedoch bei transportbegrenzter Kinetik nachfolgend auf einen statischen Wert verringern sollte, der dem vor der Potentialänderung entspricht. Das Potential sollte nicht zu stark erhöht werden, um eine Zunahme des Stroms durch Oxidation von Hydroxylionen zu vermeiden. Im Anhang der Norm werden in Abhängigkeit des zu prüfenden Werkstoffs Prüfmedien sowie Prüfbedingungen empfohlen. Bei unlegierten oder niedriglegierten Stählen ist als Medium für die Oxidationsmesszelle eine 0,1 bis 1 mol/l NaOH anzuwenden, wobei ein Potential von +300 mV vs. SCE einzustellen ist. Für die Beladungsseite wird eine 0,1 M NaOH und ein Beladestrom von 0,5 mA/cm$^2$ vorgeschlagen. Auch diese Norm dient zur Charakterisierung eines metallischen Werkstücks, nicht zur Charakterisierung der Menge an diffundiertem Wasserstoff während eines elektrochemischen oder chemischen Verfahrens.

Allen Verfahren im Stand der Technik ist gemein, dass die Diffusionsgeschwindigkeit des Wasserstoffs durch das Metall bzw. die Adsorptionskinetik auf der Beladungsseite geschwindigkeitsbestimmend sein muss. Die Oxidationsreaktion des Wasserstoffs in der Messzelle darf die Gesamtreaktion nicht beeinflussen bzw. hemmen. Zudem muss bei den vorgenannten Standardmethoden das Oxidationspotential empirisch ermittelt werden. Hierzu muss eine Vorprüfung durchgeführt werden, vorzugsweise unter den Prüfbedingungen, bei denen der Oxidationsstrom am größten ist. Somit wird in der Messzelle eine externe Strom- bzw. Spannungsquelle benötigt.

WO 2015/090571 A1 beschreibt eine Ionenaustauscher-Membran aus einer biaxial orientierten ein- oder mehrschichtigen ß-porösen Polypropylen-Folie, welche mindestens ein ß-Nukleierungsmittel enthält und ein ionenleitfähiges Polymeren umfasst und einen Gurley Wert von mindestens 10.000s aufweist, und die als Separator in einer elektrochemischen Zelle vorgesehen ist.

DE 10 2013 021771 A1 betrifft eine elektrochemische Elektrolysezelle für die Wasserelektrolyse sowie Verfahren zum Betreiben derselben.

EP 0 994 347 A2 betrifft einen elektrochemischen Gas-Sensor zur Messung von zwei verschiedenen Gasen in Gasgemischen. Der Gas-Sensor besitzt in einem Gehäuse eine erste Gasdiffusionselektrode für das erste Reaktionsgas, die gegenüber dem zweiten Reaktionsgas zumindest in einem ersten Potentialfenster inaktiv ist und eine zweite Gasdiffusionselektrode für das zweite Reaktionsgas, die gegenüber dem zweiten Reaktionsgas zumindest in einem zweiten Potentialfenster aktiv ist.

J.P.D. Carvalho et al., International Journal of Hydrogen Energy 42(1), 2017, 681, überprüfen die in ASTM G148-97 and ISO 17081:2004 vorgeschlagene Gleichung zur Berechung der Wasserstoffdiffusion in Metallen und Legierungen anhand von experimentellen Untersuchungen.

**Aufgabenstellung**

Die Aufgabe der vorliegenden Erfindung ist es, ein Verfahren zur elektrochemischen Messung von Wasserstoffpermeation durch ein metallisches Werkstück zur Verfügung zu stellen, das die Quantifizierung der Menge des durch das Werkstück diffundierten Wasserstoffs sowie die Analyse der Durchlässigkeit bzw. des Transportverhaltens von Wasserstoff während eines chemischen oder elektrochemischen Prozesses ohne Vorprüfung des Oxidationspotentials und ohne Anlegen einer externen Strom- bzw. Spannungsquelle ermöglicht.

## Erfindungsgemäße Lösung der Aufgabe und Vorteile der Erfindung

Die vorstehend definierte Aufgabe wird erfindungsgemäß durch den Einsatz einer Sauerstoffelektrode gelöst, welche die Triebkraft für die Oxidation von diffundiertem Wasserstoff bereitstellt. Dies erlaubt es, das effektive Diffusions- bzw. Transportverhalten von Wasserstoff durch ein metallisches Werkstück zu analysieren. Die Menge an diffundiertem Wasserstoff kann direkt durch Messung des Oxidationsstroms bestimmt werden. Mit anderen Worten wird im erfindungsgemäßen Verfahren die Messzelle gleichsam als galvanisches Element betrieben, vergleichbar mit dem Arbeitsprinzip einer Brennstoffzelle. Somit ist eine äußere Stromquelle nicht erforderlich, und auf eine Vorprüfung des Oxidationspotentials kann verzichtet werden.

Weiterhin kann mit der vorliegenden Erfindung das Effusionsverhalten des Wasserstoffs ermittelt werden, das heißt das Abklingverhalten des Oxidationsstroms nach Beendigung eines chemischen oder elektrochemischen Prozesses.

Ferner können Einflüsse während diversen chemischen und elektrochemischen Prozessen und deren Eingriffsgrenzen ermittelt werden. Somit können kritische Prozessparamater optimiert werden, um die Diffusion von Wasserstoff so gering wie möglich zu halten.

## Zusammenfassung der Erfindung

Die Erfindung stellt ein Verfahren zur elektrochemischen Messung von Wasserstoffpermeation durch ein metallisches oder metallisiertes Werkstück unter Einsatz einer Doppelzelle bereit, die eine Beladezelle und eine Messzelle umfasst, welche galvanisch voneinander getrennt sind, und worin die Messzelle einen Elektrolyten und eine Sauerstoffelektrode aufweist, wobei die Sauerstoffelektrode eine Gasdiffusionselektrode ist, die eine gasdurchlässige, elektrolytundurchlässige Membran aufweist, und

wobei das Verfahren die folgenden Schritte umfasst:

(a) Einbringen des Werkstücks zwischen die Belade- und die Messzelle, so dass eine erste Oberfläche des Werkstücks mit der Beladezelle und die gegenüberliegende zweite Oberfläche des Werkstücks mit der Messzelle in Verbindung steht;

(b) Durchführung einer Beladereaktion in der Beladezelle, um die erste Oberfläche des Werkstücks mit Wasserstoff zu beladen, wobei das Beladen des Werkstücks mit Wasserstoff durch eine wasserstoffbildende Reaktion erfolgt, die durch eine Interaktion eines Elektrolyten mit der Werkstückoberfläche ermöglicht wird, ausgewählt aus einer Beizreaktion, einer Passivierungsreaktion, einer chemischen oder elektrochemischen Abscheidungsreaktion, einem Entschichtungsprozess, einer Ätzreaktion, Elektropolieren, einem Entfettungsprozess und einem simulierten Korrosionsprozess;

(c) Ermöglichen einer Redoxreaktion in der Messzelle ohne Anlegen einer externen Strom- bzw. Spannungsquelle, worin die zweite Oberfläche des Werkstücks als Anode fungiert, an der der in (b) gebildete und durch das Werkstück diffundierte Wasserstoff oxidiert wird, und die Sauerstoffelektrode als Kathode fungiert, an der Sauerstoff reduziert wird, wobei ein Elektronenfluss über einen elektrischen Leiter zwischen Anode und Kathode und ein Ionenfluss über den Elektrolyten stattfindet;

(d) Messung des Elektronenflusses im elektrischen Leiter und Bestimmung der geflossenen Ladung;

(e) Ermittlung der Menge an diffundiertem Wasserstoff anhand der geflossenen Ladung.

Ein weiterer Gesichtspunkt der Erfindung betrifft die Verwendung einer Vorrichtung zur Durchführung des Verfahrens. Die erfindungsgemäß verwendete Vorrichtung umfasst eine Doppelzelle mit einer Beladezelle, einer von der Beladezelle galvanisch getrennten Messzelle und einem Zwischenraum zwischen Beladezelle und Messzelle,

worin der Zwischenraum für die Aufnahme des Werkstücks vorgesehen ist, so dass eine erste Oberfläche des Werkstücks mit der Beladezelle und die gegenüberliegende zweite Oberfläche des Werkstücks mit der Messzelle in Verbindung steht,

worin die Beladezelle für die Durchführung einer Beladereaktion eingerichtet ist, um die erste Oberfläche des Werkstücks mit Wasserstoff zu beladen;

und die Messzelle einen Elektrolyten und eine Sauerstoffelektrode als Kathode aufweist, wobei die Sauerstoffelektrode eine Gasdiffusionselektrode ist, die eine gasdurchlässige, elektrolyt-undurchlässige Membran aufweist, und die zweite Oberfläche des Werkstücks als Anode vorgesehen ist; und

worin Kathode und Anode über einen elektrischen Leiter verbunden sind, der mit einer Strommesseinrichtung versehen ist.

Die erfindungsgemäß verwendete Vorrichtung erfordert nicht, dass für die Messung eine externe Strom- bzw. Spannungsquelle eingesetzt werden muss.

## Kurze Beschreibung der Zeichnungen

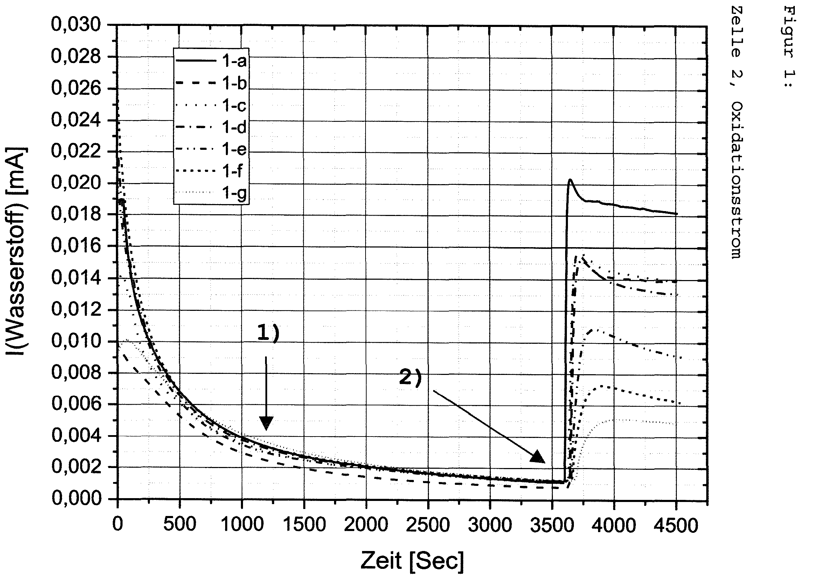

Figur 1 zeigt die Spannungs- und Stromkurven von Beispiel 1 (Wasserstoffpermeation beim Säurebeizen und bei unterschiedlichen Konzentrationen an But-2-in-1,4-diol). Der Abschnitt 1) (t = 0-3600s) zeigt die Nullkurve und 2) (t = 3600-4500s) markiert den Zeitpunkt der Beladung mit der Säurebeize.

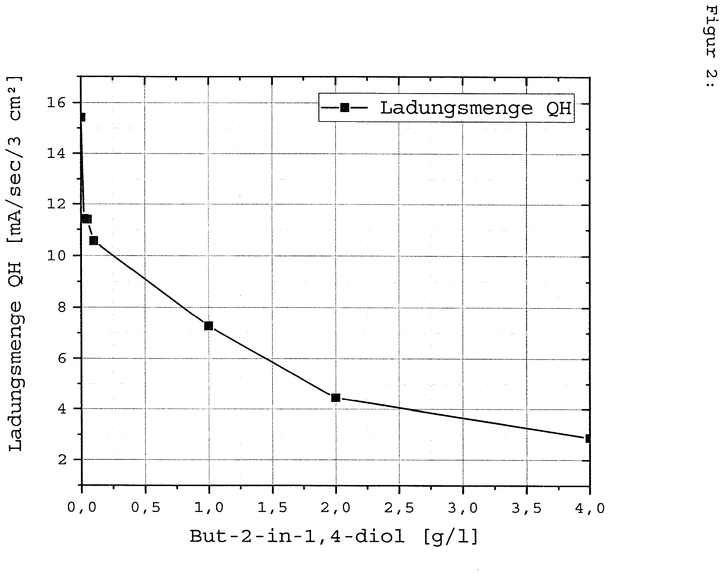

Figur 2 zeigt ein Diagramm der geflossenen Ladung $Q_H$ in Abhängigkeit der But-2-in-1,4-diol Konzentration aus Beispiel 1.

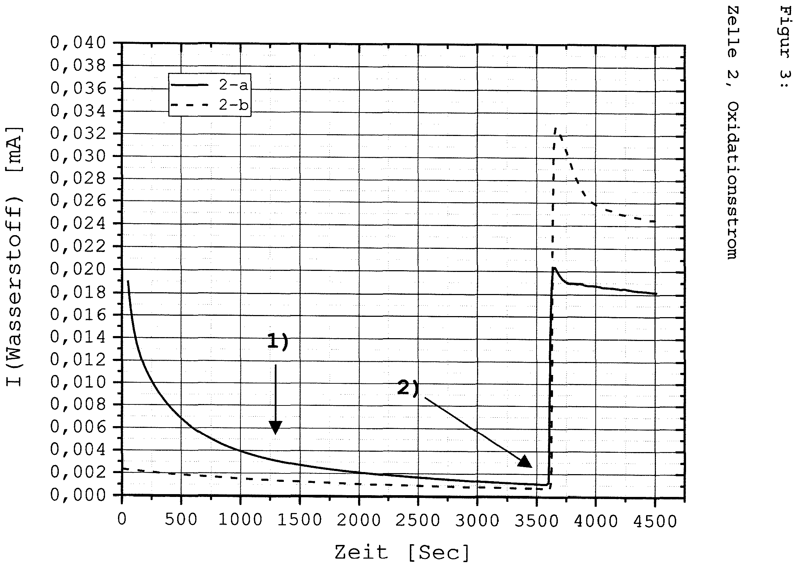

Figur 3 zeigt die Spannungs- und Stromkurven von Beispiel 2 (Wasserstoffpermeation beim Säurebeizen und Natriumsulfid). Der Abschnitt 1) (t = 0-3600s) zeigt die Nullkurve und 2) (t = 3600-4500s) markiert den Zeitpunkt der Beladung mit der Säurebeize.

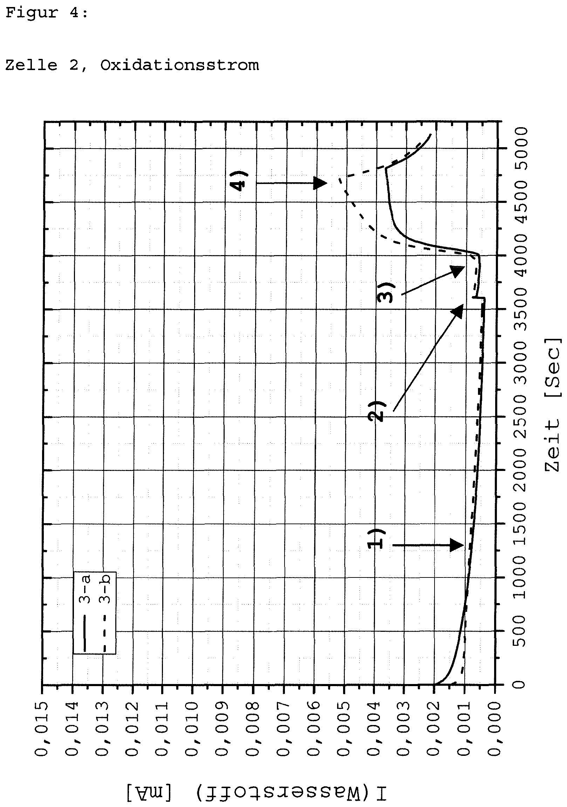

Figur 4 zeigt die Spannungs- und Stromkurven von Beispiel 3 (Wasserstoffpermeation beim elektrolytischen Entfetten und bei unterschiedlichen kathodischen Stromdichten von 6 und 10 A/dm$^2$). Der Abschnitt 1) (t = 0-3600s) zeigt die Nullkurve; der Abschnitt 2) (t = 3600-3900s) die Beladung mit SLOTOCLEAN EL DCG ohne Strom; der Abschnitt 3) (t = 3900-4800s) zeigt die Beladung mit SLOTOCLEAN EL DCG mit Strom; und der Abschnitt 4) (t = 4800-5100s) die Beladung mit SLOTOCLEAN EL DCG ohne Strom, anhand dessen das Ausschwingverhalten beobachtet werden kann.

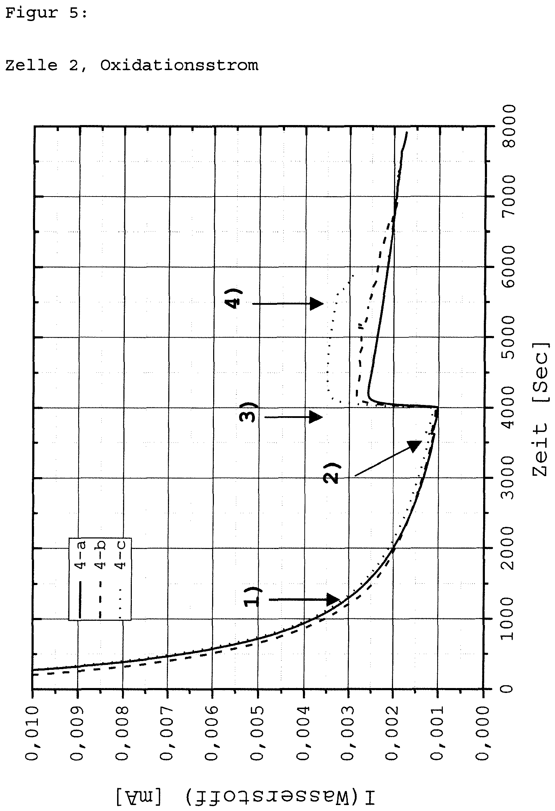

Figur 5 zeigt die Spannungs- und Stromkurven von Beispiel 4 (Galvanische Abscheidung einer 8 μm dicken Zink-Nickel-Schicht unter Verwendung unterschiedlicher kathodischer Stromdichten von 1,5; 3 und 6 A/dm$^2$). Der Abschnitt 1) (t = 0-3600s) zeigt die Nullkurve; der Abschnitt 2) (t = 3600-3900s) die Beladung mit SLOTOLOY ZN 80 ohne Strom; der Abschnitt 3) (t = 3900-4800s) zeigt die Beladung mit SLOTOLOY ZN 80 mit Strom; und der Abschnitt 4) (t = 4800-5100s) die Beladung mit SLOTOLOY ZN 80 ohne Strom, anhand dessen das Ausschwingverhalten beobachtet werden kann.

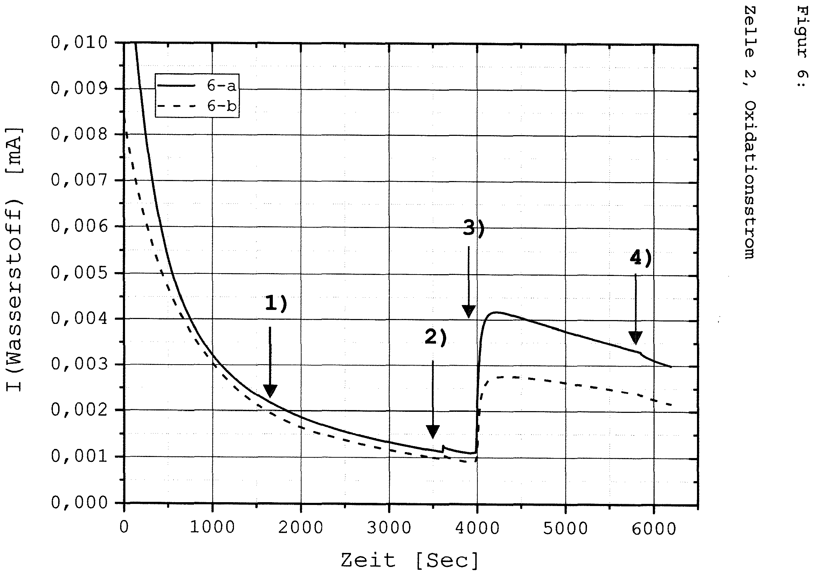

Figur 6 zeigt die Spannungs- und Stromkurven von Beispiel 6 (Galvanische Abscheidung einer 8 μm dicken Zinkschicht unter Verwendung von Lugalvan® BPC 48). Der Abschnitt 1) (t = 0-3600s) zeigt die Nullkurve; der Abschnitt 2) (t = 3600-3900s) die Beladung mit dem alkalischen Zink-Elektrolyten ohne Strom; der Abschnitt 3) (t = 3900-4800s) zeigt die Beladung mit dem alkalischen Zink-Elektrolyten mit Strom; und der Abschnitt 4) (t = 4800-5100s) die Beladung mit dem alkalischen Zink-Elektrolyten ohne Strom, anhand dessen das Ausschwingverhalten beobachtet werden kann.

## Detaillierte Beschreibung

Im Folgenden werden die erfindungsgemäßen Ausführungsformen zur Messung der Wasserstoffpermeation durch ein metallisches Werkstück unter Einsatz einer Sauerstoffelektrode näher erläutert.

## Beladezelle

In der Beladezelle wird die Werkstückoberfläche mit atomarem Wasserstoff beladen.

Dies kann durch eine chemische oder elektrochemische Reaktion erfolgen, die dazu in der Lage ist, an der Oberfläche des Werkstücks atomaren Wasserstoff zu bilden (im Folgenden als Beladereaktion bezeichnet), wie in den nachfolgenden Gleichungen (1a) und (1b) für saures bzw. alkalisches Milieu dargestellt:

(1a)

$$H^+_{(aq)} + e^- \rightarrow H_{(ad)}$$

(1b)

$$H_2O + e^- \rightarrow H_{(ad)} + OH^-$$

Die Beladereaktion ist ein Oberflächenbehandlungsprozess, der eine Interaktion eines Elektrolyten mit der Werkstückoberfläche beinhaltet. Die Interaktion bewirkt e eine wasserstoffbildende chemische Reaktion, welche zur Beladung des Werkstücks mit Wasserstoff führt.

Erfindungsgemäß ist der Oberflächenbehandlungsprozess ausgewählt aus einem Beizverfahren, einem Passivierungsverfahren, einem chemischen oder elektrochemischen Abscheideverfahren, einem Entschichtungsprozess, einem Ätzverfahren, Elektropolieren, einem Entfettungsprozess oder einem simulierten Korrosionsprozess.

Beizverfahren können sowohl unter alkalischen, sauren, neutralen als auch unter elektrolytisch unterstützen Bedingungen durchgeführt werden.

Beispiele für chemische oder elektrochemische Abscheideverfahren umfassen die Abscheidung von Zink-, Nickel-, Cadmium-, Hartchrom-, Glanzchrom- oder Edelmetallschichten, wie Gold, Palladium, Platin oder Silber. Ferner kommt die Abscheidung von Legierungsschichten, wie Zink-Nickel oder Zink-Eisen in Betracht. Die Abscheidung kann dabei aus sauren sowie aus alkalischen Elektrolyten erfolgen, wie sie typischerweise für den Korrosionsschutz von Eisen, Cadmium und Stahl eingesetzt werden. Kombinationen aus mehreren dieser Schichten, wie z.B. eine erste Abscheidung einer Nickelschicht und darauffolgende Abscheidung einer Zink-Nickellegierungsschicht, sind ebenfalls möglich.

Beispiele für Passivierungsverfahren umfassen unter anderem das Phosphatieren, Chromatieren, Brünieren oder Anodisieren.

Des Weiteren lassen sich in der Beladezelle Korrosionsprozesse simulieren, wie sie umgebungsbedingt auftreten können und die ebenfalls zur Bildung von atomarem Wasserstoff führen. Ein konkretes Beispiel besteht unter anderem in dem Versuch angelehnt an die Norm DIN EN ISO 9227, wo eine 50 g/l NaCl-Lösung in einem pH-Bereich von 6,5 bis 7,2 und bei einer Temperatur von 25°C untersucht wird.

Der Korrosionsprozess kann unter Einwirkung eines flüssigen Mediums erfolgen. Weiterhin kann der Wasserstoff auch durch Einwirken eines korrosiven Gases, wie HCl, in Verbindung mit Wasserdampf oder Feuchtigkeit in das Werkstück eingebracht werden. Aufgrund der Kondensation findet die wasserstoffbildende Reaktion auf der Werkstückoberfläche letztlich wieder durch Interaktion mit einem flüssigen Elektrolyten (z.B. $HCl_{aq}$) statt. Neben normalen Korrosionsprozessen von Eisen- und Stahloberflächen in Verbindung mit Luftfeuchtigkeit, kommen auch Lokalelemente oder Bimetallkorrosion in Betracht.

Die Beladereaktion wird typischerweise in flüssigem Medium durchgeführt. Sie kann aber beispielsweise auch in gasförmigem Medium, z.B. mit Druckwasserstoff, erfolgen.

Falls die Beladereaktion elektrolytisch durchgeführt wird, beispielsweise durch galvanische Abscheidung, elektrolytisches Entfetten, Anodisieren, Passivieren oder Elektropolieren, wird die Beladezelle mit einer Gegenelektrode ausgestattet, die als Anode geschaltet wird während das Werkstück als Kathode fungiert. Die Gegenelektrode kann dabei eine inerte Elektrode oder im Falle der galvanischen Beschichtung auch eine lösliche Elektrode, z.B. aus Zink, sein. Typische Beispiele für inerte Elektroden sind Edelmetallelektroden z.B. aus Platin oder einer Platinlegierung, wie Platin-Iridium, oder aus Palladium. Ferner kommen Elektroden aus Metallen in Betracht, die im jeweils eingesetzten Elektrolyten passiviert bzw. unreaktiv sind, wie z.B. Vollnickelelektroden in alkalischem Medium. Weiterhin benötigt die elektrolytische Beladereaktion eine externe Stromquelle.

Die Beladezelle kann gegebenenfalls mit einer Bezugselektrode und einer Messvorrichtung, beispielsweise mit einem hochohmigen Labormultimeter, versehen werden, um das Potential der Bezugselektrode gegenüber dem Werkstück und/oder der Gegenelektrode sowie Potential und Strom zwischen Werkstück und Gegenelektrode bestimmen zu können.

Die Bezugselektrode kann mit einer Haber-Luggin-Kapillare betrieben werden, um einen Potentialabfall zwischen dem Werkstück und der Bezugselektrode zu reduzieren. Die Bezugselektrode ist nicht speziell beschränkt und es kommen beispielsweise Wasserstoffelektroden, Kalomelelektroden oder Ag-AgCl-Elektroden in Frage.

Der Aufbau und die Beschaffenheit der Beladezelle sind nicht speziell beschränkt, sofern sie sich für das Einbringen des Werkstücks und Durchführen der Beladereaktion eignet. Typischerweise ist sie einem gegenüber der Beladereaktion inerten Material hergestellt, z.B. Glas oder Kunstoffen, wie Polypropylen (PP).

Gegebenenfalls ist die Beladezelle mit einem Deckel ausgestattet. Weiterhin kann die Beladezelle Anschlüsse zum Ein- und Ausleiten von Gasen aufweisen.

Insbesondere kommt als Beladezelle der Beladeteil von handelsüblichen Doppelzellen zur Messung von Wasserstoffpermeation nach DIN EN ISO 17081 oder ASTM G148-97 in Betracht.

**Messzelle**

In der Messzelle erfolgt die Oxidation des Wasserstoffs, der in der Beladezelle gebildet wurde und durch das Werkstück diffundiert ist. Das Werkstück fungiert dabei als Anode:

$$4\ H_{ad} \rightarrow 4\ H^+ + 4\ e^-$$

Als Kathode dient eine Sauerstoffelektrode. Die Reduktion des Sauerstoffs liefert dabei die Triebkraft für die Reaktion:

$$O_2 + 2\,H_2O + 4\,e^- \rightarrow 4\,OH^-$$

Zusammengenommen entsprechen die Anoden- und Kathodenreaktion den elektrochemischen Reaktionen in einer Wasserstoff-Brennstoffzelle.

Der Elektronenfluss erfolgt über einen elektrischen Leiter zwischen Anode (Werkstück) und Kathode (Sauerstoffelektrode) in Form von elektrischem Strom. Dieser wird amperometrisch mittels einer entsprechenden Messeinrichtung bestimmt. In Abhängigkeit der Zeit kann so die geflossene Ladung gemäß

$$Q = \int I(t)\,dt$$

ermittelt werden, wobei Q die Ladung, I der Strom und t die Zeit ist.

Die geflossene Ladung ist proportional zur Stoffmenge an oxidiertem Wasserstoff. Deshalb kann die Menge an Wasserstoff gemäß

$$n = Q/F$$

bestimmt werden, wobei n die Stoffmenge des Wasserstoffs und F die Faraday-Konstante darstellt.

Der Ionenfluss kann über einen wässrigen, gelartigen oder Feststoffelektrolyten stattfinden. Der Elektrolyt ist nicht speziell beschränkt, solange er die Redoxreaktion nicht behindert. Typischerweise kommt ein basischer Elektrolyt, wie NaOH oder KOH, zum Einsatz. Es kann aber auch ein saurer Elektrolyt, beispielsweise Phosphorsäure, verwendet werden. Wichtig ist nur, dass das metallische oder metallisierte Werkstück nicht selbst an der Redoxreaktion teilnimmt, d.h. selber nicht oxidiert wird.

In alkalischem Milieu bildet sich auf z.B. Stahl eine Passivschicht/Oxidschicht, wodurch die Teilnahme des Werkstücks an der Redoxreaktion verhindert wird. Werkstücke die in alkalischem Milieu keine Passivschicht/Oxidschicht ausbilden bzw. aufgrund der Beschaffenheit des Elektrolyten an der Redoxreaktion in der Messzelle teilnehmen, können an der gegenüberliegenden zweiten Oberfläche des Werkstücks, das mit der Messzelle in Verbindung steht, mit einer Palladiumschicht überzogen werden, um eine entsprechende Teilnahme des Werkstücks an der Redoxreaktion zu unterdrücken.

Der als Kathode fungierenden Sauerstoffelektrode wird unbegrenzt gasförmiger Sauerstoff, beispielsweise als Sauerstoffgas oder in Form von Luftsauerstoff, zugeführt. Dieser wird an ihr zu OH⁻ bzw. $H_2O$ reduziert, was die Triebkraft für die Oxidation des Permeationswasserstoffs liefert.

Das Elektrodenmaterial ist nicht speziell beschränkt, doch kommen vorzugsweise solche mit geringer Sauerstoff-Überspannung zum Einsatz, beispielsweise Silber, Gold, Nickel, Mangan, Platinmetalle, wie Pt, Pd, Legierungen mit diesen, oder Kohlenstoffe, wie Graphit, Ruß oder Kohle zum Einsatz.

Erfindungsgemäß kommt eine Gasdiffusionselektrode zum Einsatz. Hierzu ist das Elektrodenmaterial auf einen porösen Träger aufgebracht, beispielsweise auf Aktivkohle oder ein vergoldetes Drahtgewebe aus Nickel, um eine möglichst große Dreiphasengrenzfläche zwischen Sauerstoffgas, Elektrolyt und Elektrodenmaterial bereitzustellen.

Die Gasdiffusionselektrode kann direkt mit Sauerstoff oder Luft versorgt werden, beispielsweise durch Gaseinleitung, oder sie ist so in die Messzelle eingebaut, dass sie durch eine gasdurchlässige, elektrolyt-undurchlässige Membran mit dem Äußeren der Zelle in Verbindung steht. Dann kann von außen Umgebungsluft oder Sauerstoffgas zugeführt werden.

Die Messzelle kann gegebenenfalls mit einer Bezugselektrode versehen sein, um das Wasserstoffpotential bestimmen zu können. Die Bezugselektrode ist nicht speziell beschränkt und es können die gleichen zum Einsatz kommen wie für die Beladezelle beschrieben.

Zur Messung des elektrischen Stroms zwischen Werkstück und Sauerstoffelektrode (Oxidationsstrom) und gegebenenfalls des Wasserstoffpotentials zwischen Werkstück und Bezugselektrode wird eine Messeinrichtung eingesetzt. Hierbei können handelsübliche Strom- und Spannungsmessgeräte verwendet werden, z.B. Digitalmultimeter. Die Strom- bzw. Spannungsmessung erfolgt dabei erdfrei, d.h. das Messgerät ist nicht mit dem Erdungsystem des Gebäudes verbunden. Das Messgerät muss allerdings einen isolierenden Massenbezug besitzen. Für die Strommessung in der Messzelle ist deshalb ein Multimeter notwendig, welches potentialfrei ("floating") misst.

Der Aufbau und die Beschaffenheit der Messzelle sind nicht speziell beschränkt, sofern sie sich für das Einbringen des Werkstücks und Durchführen der oben aufgeführten Redoxreaktion eignet. Typischerweise ist sie einem gegenüber der Redoxreaktion inerten Material hergestellt, z.B. Glas oder Kunstoffen, wie Polypropylen (PP). Die Messzelle ist dafür vorgesehen, mit der Beladezelle verbunden zu werden. Sie ist dabei so aufgebaut, dass beim Verbinden mit der Beladezelle ein Zwischenraum entsteht, der für die Aufnahme des Werkstücks vorgesehen ist.

Gegebenenfalls ist die Messzelle mit einem Deckel ausgestattet. Weiterhin kann die Messzelle Anschlüsse zum Ein- und Ausleiten von weiteren Gasen neben Sauerstoff aufweisen.

**Werkstück**

Das zwischen Beladezelle und Messzelle einzusetzende Werkstück ist nicht speziell beschränkt, und es können jegliche bekannte Materialien, die im Hinblick auf Wasserstoffbildung und/oder Permeation untersucht werden sollen, verwendet werden. Im erfindungsgemäßen Verfahren können deshalb beispielsweise Materialien aus Eisen, Titan, Tantal, Vanadium, Zirkon, Niob, Aluminium, Nickel sowie Legierungen von diesen eingesetzt werden.

Vorzugsweise ist das Werkstück planar, etwa in Form eines Blechs oder einer Membran, und weist eine Dicke von 5 mm oder weniger, vorzugsweise 1 mm oder weniger, insbesondere 0,5 mm oder weniger auf. Da die Dicke-Richtung als Diffusionsstrecke für den Wasserstoff fungiert, sind im Hinblick auf die Nachweisempfindlichkeit geringe Dicken vorzuziehen.

Das Werkstück ist so in die Doppelzelle einzusetzen, dass eine erste Oberfläche des Werkstücks mit der Beladezelle und die gegenüberliegende zweite Oberfläche des Werkstücks mit der Messzelle in Verbindung steht. Somit trennt das Werkstück die beiden Zellen, und die Wasserstoffpermeation erfolgt in Dicke-Richtung von der Beladezelle durch das Werkstück in die Messzelle.

Für den Fall, dass die Beladereaktion elektrolytisch abläuft, wird die erste Oberfläche des Werkstücks, die mit der Beladezelle in Kontakt steht, als Kathode geschaltet während die Gegenelektrode als Anode fungiert. Die gegenüberliegende zweite Oberfläche des Werkstücks, die mit der Messzelle in Verbindung steht, wird als Anode geschaltet während die Sauerstoffelektrode als Kathode fungiert.

**Messverfahren**

Im erfindungsgemäßen Verfahren wird der Strom im elektrischen Leiter zwischen Werkstück und Sauerstoffelektrode gemessen. Es handelt sich dabei um den Gesamtoxidationsstrom bestehend aus Permeationsstrom und Hintergrundstrom.

Als Permeationsstrom wird der Strom bezeichnet, der durch die Oxidation des Wasserstoffs gebildet wird und daher zur Wasserstoffpermeation proportional ist. Um ihn zu bestimmen, ist vom gemessenen Gesamtstrom der Hintergrundstrom zu subtrahieren.

Der Hintergrundstrom wird generell über die Aufnahme von Nullkurven über einen bestimmten Zeitraum ermittelt. Während diese Maßnahme bei dem Einsatz von Feststoffelektrolyten nicht zwingend durchgeführt werden muss, müssen bei der Verwendung von flüssigen Elektrolyten gegebenenfalls Nullkurven aufgenommen werden. In anderen Worten wird das Oxidationspotential in der Messzelle vor Beginn der Beladereaktion bestimmt. In der Regel beträgt die Messzeit 60 Minuten. Der Hintergrundstrom sollte dabei einen Wert von 0,1 $\mu$A/cm$^2$ nicht überschreiten.

Durch den Kontakt des Werkstücks mit dem Elektrolyten, z.B. 1 M NaOH (pH 14), kommt es zu einer Deckschichtbildung in Form von Eisenoxid bzw. Eisenhydroxid infolge einer Metallkorrosionsreaktion (Ausbildung einer Passivschicht/Oxidschicht) in den Reaktionen:

Oxidationsreaktion:

$$2\ Fe \rightarrow 2\ Fe^{2+} + 4\ e^-$$

Reduktionsreaktion:

$$O_2 + 2\ H_2O + 4\ e^- \rightarrow 4\ OH^-$$

Folgereaktion:

$$Fe^{2+} + 2\ OH^- \rightarrow Fe(OH)_2$$

Oxidationsreaktion:

$$4\ Fe^{2+} \rightarrow 4\ Fe^{3+} + 4\ e^-$$

Reduktionsreaktion:

$$O_2 + 2\,H_2O + 4\,e^- \rightarrow 4\,OH^-$$

Folgereaktion:

$$Fe^{3+} + 3\,OH^- \rightarrow Fe\,(OH)_3$$

Nach Start der Beladereaktion in der Beladezelle wird der zwischen dem Werkstück und der Sauerstoffelektrode fließende Strom in der Messzelle gemessen.

Die Messung kann über die gesamte Dauer der Beladereaktion durchgeführt werden.

Falls die Beladereaktion elektrolytisch durchgeführt wird, kann zudem auch eine Messung nach dem Einfüllen des Elektrolyten aber vor dem Start der eigentlichen Beladereaktion durch Einschalten des Elektrolysestroms durchgeführt werden, um etwa den Einfluss des Elektrolyten selbst auf die Wasserstoffdiffusion zu ermitteln. Nach Einschalten der externen Stromquelle, also nach Start der Beladereaktion, wird der Oxidationsstrom ebenfalls gemessen.

Ebenso kann nach Beendigung der Beladereaktion, also z.B. nach Abschalten des Elektrolysestroms oder Entfernen des Elektrolyten oder der Beize aus der Beladezelle, weiter gemessen werden, um das Effusionsverhalten, also das Abklingverhalten des Oxidationsstroms nach Beendigung der Beladereaktion, zu analysieren.

Über den Permeationsstrom I (Gesamtoxidationsstrom minus Hintergrundstrom)in Abhängigkeit der Zeit t lässt sich gemäß

$$Q = \int I(t)\,dt$$

die geflossene Ladung Q bestimmen.

Die geflossene Ladung ist proportional zur Stoffmenge an oxidiertem Wasserstoff. Deshalb lässt sich über die geflossene Ladung Q und die Faraday-Konstante F die Menge an oxidiertem Wasserstoff berechnen als

$$n = Q/F.$$

Im Folgenden wird die Erfindung anhand von Beispielen näher erläutert.

**Beispiele**

**Beispiel 1**

Es wurde der Einfluss von unterschiedlichen Konzentrationen an But-2-in-1,4-diol auf die Menge an diffundiertem Wasserstoff beim Säurebeizen eines Stahlblechs als Werkstück untersucht. But-2-in-1,4-diol ist ein Inhibitor, der die Auflösung von Eisen bzw. Stahl in einer Beize reduzieren bzw. hemmen soll. Demnach ist mit steigender Konzentration an But-2-in-1,4-diol mit einer Reduzierung des diffundierten Wasserstoffs zu rechnen.

Versuchsaufbau und Durchführung:

Für die Messungen wurde eine Doppelzelle (FlexCell®) mit Zusatzkammer verwendet (Lieferant: Fa. Gaskatel GmbH). Zelle 1 der Doppelzelle wurde als Beladezelle eingesetzt, während Zelle 2 als Messzelle fungierte.

Als Referenzelektrode für die Zelle 1 und Zelle 2 wurde je eine Wasserstoffelektrode (Hydroflex®) verwendet (Lieferant: Fa. Gaskatel GmbH).

In Zelle 2 wurde als Gegenelektrode eine Gasdiffusionselektrode (Biplex®) eingesetzt.

Als Werkstück bzw. Probe wurde ein blanker unlegierter Stahl (Werkstoff: DC01, Dicke: 0,1 mm, Lieferant: Fa. Record Metall-Folien GmbH) verwendet. Die Fläche der kreisrunden Probe betrug 3 cm².

Die Probe wurde in einer SLOTOCLEAN AK 160 (Fa. Schlötter; 30 g/l SLOTOCLEAN AK 161, 15 ml/l SLOTOCLEAN RV 111) entfettet, anschließend mit entionisiertem Wasser gespült und mit einem Heißluftgebläse getrocknet. Anschließend wurde die Probe in die Doppelzelle eingebaut.

Die Abdichtung zwischen Probe, Elektrolyt und Zelle erfolgte mit je einem O-Ring aus Ethylen-Propylen-Dien-(Monomer)-Kautschuk (EPDM; 24x2 mm).

Als Elektrolyt in Zelle 2 (Messzelle) wurde 1 M NaOH eingesetzt (15 ml). Strom und Spannung zwischen Probe und Gegenelektrode wurden mit einem Multimeter 2000-20 der Fa. Keithley gemessen. Vor Durchführung des Beizens wurde zunächst jeweils über 60 Minuten eine Nullkurve aufgenommen.

Anschließend wurde Zelle 1 (Beladezelle) mit dem zu untersuchenden Elektrolyten (30 ml) befüllt. Als Elektrolyt wurde jeweils eine HCl-Beize (19 Gew.-% HCl) mit unterschiedlichen Konzentrationen an But-2-in-1,4-diol eingesetzt, wie in der nachfolgenden Tabelle 1 beschrieben. Die Beiz-Zeit betrug jeweils 15 Minuten.

Es wurden Strom- und Spannungskurven gegen die Zeit aufgenommen, und die geflossene Ladungsmenge sowie die entsprechende Menge an Wasserstoff berechnet. Aus dem Intergral der Strom-Zeit-Kurve (Start der Beladung bis Ende der Beladung) wurde die Ladungsmenge Q berechnet, aus der Ladungsmenge $Q_H$ die Stoffmenge $n_H$. Dabei wurde eine Stöchiometrie gemäß der Gleichung $H(ad) \rightarrow H^+ + e^-$ angenommen. Die Aufnahme der Nullkurven als auch die Aufnahme der Messkurven erfolgte bei einer Temperatur von 25°C in beiden Zellen. Die Messung erfolgte ohne Rühren des Elektrolyten in Zelle 1 und 2.

Die Kurven sind in Figur 1 dargestellt. Tabelle 1 zeigt die gemessenen Ladungsmengen $Q_H$ sowie die daraus berechnete Menge an diffundiertem Wasserstoff.

Tabelle 1:

| Test | Beladungs-Elektrolyt | Ladungsmenge $Q_H$ mA·sec/3 cm$^2$ | Stoffmenge $n_H$ mol/3cm$^2$ |
|---|---|---|---|
| 1-a | 19 Gew.-% HCl-Beize | 15,43 | $16,0*10^{-8}$ |
| 1-b | 19 Gew.-% HCl-Beize + 0,025 g/l But-2-in-1,4-diol | 11,42 | $11,8*10^{-8}$ |
| 1-c | 19 Gew.-% HCl-Beize + 0,05 g/l But-2-in-1,4-diol | 11,39 | $11,8*10^{-8}$ |
| 1-d | 19 Gew.-% HCl-Beize + 0,1 g/l But-2-in-1,4-diol | 10,56 | $10,9*10^{-8}$ |
| 1-e | 19 Gew.-% HCl-Beize + 1,0 g/l But-2-in-1,4-diol | 7,27 | $7,54*10^{-8}$ |
| 1-f | 19 Gew.-% HCl-Beize + 2,0 g/l But-2-in-1,4-diol | 4,45 | $4,61*10^{-8}$ |
| 1-g | 19 Gew.-% HCl-Beize + 4,0 g/l But-2-in-1,4-diol | 2,87 | $2,98*10^{-8}$ |

Ergebnisse:

Wie in Tabelle 1 gezeigt, sinkt die Menge an diffundiertem Wasserstoff mit steigender Inhibitorkonzentration. Die Landungsmenge $Q_H$ ist ohne Inhibitor am höchsten und nimmt mit zunehmender Inhibitorkonzentration ab. Je höher die eingesetzte Inhibitorkonzentration, desto geringer die errechnete Ladungsmenge $Q_H$ an Wasserstoff und desto geringer die Menge an diffundiertem Wasserstoff. Ein linearer Zusammenhang zwischen Inhibitorkonzentration und Ladungsmenge $Q_H$ besteht allerdings nicht (siehe Figur 2).

**Beispiel 2**

Es wurde der Einfluss von Natriumsulfid ($Na_2S$) auf die Menge an diffundiertem Wasserstoff beim Säurebeizen eines Stahlblechs als Werkstück untersucht. Natriumsulfid ist ein Promotor, der die Wasserstoffaufnahme in den Werkstoff sowie die Auflösung des Eisens bzw. des Stahls beschleunigt. Demnach ist mit Zugabe des Natriumsulfids mit einer Erhöhung des diffundierten Wasserstoffs zu rechnen.

Versuchsaufbau und Durchführung:

Beispiel 2 wurde unter den gleichen Bedingungen, wie in Beispiel 1 beschrieben, durchgeführt. Der einzige Unterschied bestand in der Zusammensetzung der Beize, wie in Tabelle 2 angegeben.

Die Kurven (Nullkurve und Messkurven) sind in Figur 3 dargestellt. Tabelle 2 zeigt die gemessenen Ladungsmengen $Q_H$ sowie die daraus berechnete Menge an diffundiertem Wasserstoff.

Tabelle 2:

| Test | Beladungs-Elektrolyt | Ladungsmenge | Stoffmenge |
| | | $Q_H$ | $n_H$ |
| | | $mA \cdot sec/3\ cm^2$ | $mol/3\ cm^2$ |
|---|---|---|---|
| 2-a | 19 wt.-% HCl-Beize | 15,43 | $16,0*10^{-8}$ |
| 2-b | 19 wt.-% HCl-Beize + 0,1 g/l $Na_2S$ | 22,52 | $23,3*10^{-8}$ |

Ergebnisse:

Wie aus Tabelle 2 ersichtlich, steigt die Menge an diffundiertem Wasserstoff mit Zugabe des Promotors.

**Beispiel 3**

Es wurde der Einfluss von zwei unterschiedlichen kathodischen Stromdichten von 6 und 10 $A/dm^2$ auf die Menge an diffundiertem Wasserstoff beim elektrolytischen Entfetten eines Stahlblechs als Werkstück untersucht. Mit steigender Stromdichte ist auch mit einer Erhöhung des diffundierten Wasserstoffs zu rechnen.

Versuchsaufbau und Durchführung:

Es wurde der der gleiche Versuchsaufbau wie in Beispiel 1 eingesetzt. Die Probe und die Konfiguration in Zelle 2 (Messzelle) waren ebenfalls identisch.
Zelle 1 wurde für das elektrochemische Entfetten mit einem Pt-Ir-Draht als Gegenelektrode ausgestattet.
Als elektrolytisches Entfettungsbad kam SLOTOCLEAN EL DCG (Fa. Schlötter, 120 g/l, 30 ml) zum Einsatz.
Als Stromquelle wurde ein Galvanostat/Potentiostat der Fa. HEKA (Typ: PG 310) verwendet.
Die Temperatur in Zelle 2 betrug 35°C.
Vor Zugabe des Entfettungsbads wurde zunächst wieder 60 Minuten lang eine Nullkurve aufgenommen. Anschließend wurde das Entfettungsbad zugegeben ohne in Zelle 1 Strom anzulegen, und der Stromfluss in Zelle 2 wurde jeweils 5 Minuten lang gemessen. Danach wurde in Zelle 1 zum Entfetten 15 Minuten lang Strom angelegt und der Stromfluss in Zelle 2 gemessen. Nach Abschalten des Stromes wurde in Zelle 2 das Ausschwingverhalten über 5 Minuten analysiert. Es wurden zwei Durchgänge mit einer jeweils unterschiedlichen kathodischen Stromdichte durchgeführt, wie in Tabelle 3 gezeigt.
Die Kurven sind in Figur 4 dargestellt. Tabelle 3 zeigt die gemessenen Ladungsmengen $Q_H$ sowie die daraus berechnete Menge an diffundiertem Wasserstoff.

Tabelle 3:

| Test | Beladungs-Elektrolyt | Ladungsmenge | Stoffmenge |
| | | $Q_H$ | $n_H$ |
| | | $mA \cdot sec/3\ cm^2$ | $mol/3\ cm^2$ |
|---|---|---|---|
| 3-a | 120 g/l SLOTOCLEAN EL DCG → 6 $A/dm^2$, kathodisch | 2,076 | $2,15*10^{-8}$ |
| 3-b | 120 g/l SLOTOCLEAN EL DCG → 10 $A/dm^2$, kathodisch | 2,830 | $2,93*10^{-8}$ |

Ergebnisse:

Wie aus Figur 4 ersichtlich, führte bereits das Einfüllen des SLOTOCLEAN EL DCG zu einem geringfügigen Anstieg des Oxidationsstroms in Zelle 2. Durch Start des Stroms in Zelle 1 konnte ein deutlicher Anstieg des Elektronenflusses gemessen werden. Tabelle 3 kann entnommen werden, dass eine Erhöhung der kathodischen Stromdichte in Zelle 1 zu einer Erhöhung der Ladungsmenge $Q_H$ in Zelle 2 und somit auch zu einer größeren Menge an diffundiertem Wasserstoff führt. Was das Ausschwingverhalten betrifft, so kann Figur 4 entnommen werden, dass nach Ausschalten des Stroms ein schneller Abfall des Elektronenflusses zu beobachten ist.

**Beispiel 4**

Es wurde der Einfluss von drei unterschiedlichen kathodischen Stromdichten von jeweils 1,5; 3 und 6 A/dm$^2$ auf die Menge an diffundiertem Wasserstoff bei der galvanischen Abscheidung einer 8 $\mu$m dicken Zink-Nickel-Schicht auf einem Stahlblech als Werkstück untersucht.

Versuchsaufbau und Durchführung:

Beispiel 4 wurde unter den gleichen Bedingungen, wie in Beispiel 3 beschrieben, durchgeführt. Der einzige Unterschied bestand darin, dass ein galvanisches Beschichtungsbad anstatt einem Entfettungsbad verwendet wurde und die kathodische Stromstärke jeweils 1,5; 3 und 6 A/dm$^2$ betrug.

Als galvanisches Beschichtungsbad kam SLOTOLOY ZN 80 (Fa. Schlötter) zum Einsatz. Der Neubadansatz (SLOTOLOY ZN 80) wies dabei folgende Zusammensetzung auf:

| | |
|---|---|
| Zn: | 6,5 g/l als ZnO |
| SLOTOLOY ZN 85*: | 8 ml/l (0,5 g/l Ni) |
| NaOH: | 120 g/l |
| SLOTOLOY ZN 81*: | 40 ml/l (Komplexbildner-Gemisch) |
| SLOTOLOY ZN 82*: | 75 ml/l (Komplexbildner-Gemisch) |
| SLOTOLOY ZN 87*: | 5 ml/l (Grundglanzadditiv) |

*Erhältlich von der Fa. Schlötter

Vor Zugabe des Zink-Nickel-Beschichtungsbads wurde zunächst wieder 60 Minuten lang eine Nullkurve aufgenommen. Anschließend wurde das Zink-Nickel-Beschichtungsbad zugegeben ohne in Zelle 1 Strom anzulegen, und der Stromfluss in Zelle 2 wurde jeweils 5 Minuten lang gemessen. Danach wurde in Zelle 1 Strom angelegt bis eine Schichtdicke von 8 $\mu$m erreicht wurde und der Stromfluss in Zelle 2 wurde gemessen. Die genauen Beladzeiten mit dem Beschichtungsbad sind in Tabelle 4 gezeigt. Nach Abschalten des Stromes wurde in Zelle 2 das Ausschwingverhalten über 5 Minuten analysiert. Es wurden drei Durchgänge mit einer jeweils unterschiedlichen kathodischen Stromdichte durchgeführt, wie in Tabelle 4 gezeigt.

Die Kurven sind in Figur 5 dargestellt. Tabelle 4 zeigt die gemessenen Ladungsmengen $Q_H$ sowie die daraus berechnete Menge an diffundiertem Wasserstoff.

Tabelle 4:

| Test | Beladungs-Elektrolyt | Ladungsmenge $Q_H$ mA·sec/3 cm$^2$ | Stoffmenge $n_H$ mol/3 cm$^2$ |
|---|---|---|---|
| 4-a | SLOTOLOY ZN 80 → 1,5 A/dm$^2$, 62 Min. | 4,24 | 4,39*10$^{-8}$ |
| 4-b | SLOTOLOY ZN 80 → 3,0 A/dm$^2$, 44 Min. | 3,80 | 3,93*10$^{-8}$ |
| 4-c | SLOTOLOY ZN 80 → 6,0 A/dm$^2$, 28 Min. | 3,64 | 3,77*10$^{-8}$ |

Ergebnisse:

Tabelle 4 kann entnommen werden, dass die Ladungsmenge $Q_H$ und dadurch auch die Menge an diffundiertem Wasserstoff mit steigender kathodischer Stromdichte abnahm. Je höher die kathodische Stromdichte, desto geringer die benötigte Zeit um eine 8 $\mu$m dicke Zink-Nickel-Schicht abzuscheiden. Was das Ausschwingverhalten betrifft, so zeigt Figur 5, dass nach Ausschalten des Stroms ein langsamer Abfall des Elektronenflusses zu beobachten ist.

**Beispiel 5**

Es wurde der Einfluss von unterschiedlichen Konzentrationen an Benzalaceton, einem Glanzbildner, auf die Menge an diffundiertem Wasserstoff bei der galvanischen Abscheidung einer 8 $\mu$m dicken Zinkschicht auf einem Stahlblech als Werkstück aus einem schwachsauren Zink-Elektrolyten untersucht.

Versuchsaufbau und Durchführung:

Es wurde der gleiche Versuchsaufbau wie in Beispiel 1 eingesetzt. Die Probe und die Konfiguration in Zelle 2 (Messzelle) waren ebenfalls identisch.

Zelle 1 wurde für die galvanische Abscheidung der Zinkschicht mit Feinzink als Gegenelektrode ausgestattet.

Als galvanisches Beschichtungsbad wurde SLOTANIT OT 110 (Fa. Schlötter) und unterschiedliche Konzentrationen an Benzalaceton eingesetzt, wie in der nachfolgenden Tabelle 4 beschrieben. Der Neubadansatz (SLOTANIT OT 110) wies dabei folgende Zusammensetzung auf:

| | |
|---|---|
| $ZnCl_2$ : | 73 g/l |
| KCl: | 260 g/l |
| $H_3BO_3$ : | 25 g/l |
| SLOTANIT OT 111*: | 35 ml/l |
| Korrekturzusatz 1001*: | 20 ml/l |

*Erhältlich von der Fa. Schlötter

Als Stromquelle wurde ein Galvanostat/Potentiostat der Fa. HEKA (Typ: PG 310) verwendet. Die kathodische Stromdichte wurde bei 3 A/dm$^2$ konstant gehalten.

Die aktive Beladezeit mit dem Beschichtungsbad betrug jeweils 10 Minuten bis eine 8 $\mu$m dicke Zinkschicht abgeschieden wurde.

Tabelle 4 zeigt die gemessenen Ladungsmengen $Q_H$ sowie die daraus berechnete Menge an diffundiertem Wasserstoff.

Tabelle 5:

| Test | Beladungs-Elektrolyt | Ladungsmenge $Q_H$ mA·sec/3 cm$^2$ | Stoffmenge $n_H$ mol/3 cm$^2$ |
|---|---|---|---|
| 5-a | SLOTANIT OT 110 + 0 mg/l Benzalaceton | 0,023 | 0,024*10$^{-8}$ |
| 5-b | SLOTANIT OT 110 + 80 mg/l Benzalaceton | 0,018 | 0,018*10$^{-8}$ |
| 5-c | SLOTANIT OT 110 + 320 mg/l Benzalaceton | 0,006 | 0,006*10$^{-8}$ |

Ergebnisse:

Wie in Tabelle 5 gezeigt, sinkt die Menge an diffundiertem Wasserstoff mit steigender Benzalaceton-Konzentration. Die Landungsmenge $Q_H$ ist ohne Zugabe an Glanzbildner am höchsten und nimmt mit zunehmender Benzalaceton-Konzentration ab. Je höher die eingesetzte Menge an Glanzbildner, desto geringer die errechnete Ladungsmenge $Q_H$ an Wasserstoff und desto geringer die Menge an diffundiertem Wasserstoff.

**Beispiel 6**

Es wurde der Einfluss von Lugalvan® BPC 48 der Fa. BASF, einem Glanzbildner, auf die Menge an diffundiertem Wasserstoff bei der galvanischen Abscheidung einer 8 $\mu$m dicken Zinkschicht auf einem Stahlblech als Werkstück aus einem alkalischen Zink-Elektrolyten untersucht.

Versuchsaufbau und Durchführung:

Beispiel 6 wurde unter den gleichen Bedingungen, wie in Beispiel 5 beschrieben, durchgeführt. Der einzige Unterschied bestand in der Zusammensetzung des Beschichtungsbads, wie in Tabelle 6 angegeben, und darin, dass in Zelle 1 eine Vollnickel-Anode als Gegenelektrode verwendet wurde. Als galvanisches Beschichtungsbad kam ein alkalischer Zink-Elektrolyt der Fa. BASF zum Einsatz. Der Neubadansatz wies dabei folgende Zusammensetzung auf:

| | |
|---|---|
| Zn: | 8 g/l als Natriumzinkat-Lösung |
| NaOH: | 100 g/l |
| $NaCO_3$: | 35 g/l |
| Lugalvan IZE*: | 4,4 g/l |
| Lugalvan P*: | 4,8 g/l |

*Erhältlich von der Fa. BASF

Vor Zugabe des Zink-Beschichtungsbads wurde zunächst wieder 60 Minuten lang eine Nullkurve aufgenommen. Anschließend wurde das Zink-Beschichtungsbad zugegeben ohne in Zelle 1 Strom anzulegen, und der Stromfluss in Zelle 2 wurde jeweils 5 Minuten lang gemessen. Danach wurde in Zelle 1 Strom angelegt bis eine Schichtdicke von 8 $\mu$m erreicht wurde (10 Minuten) und der Stromfluss in Zelle 2 wurde gemessen. Nach Abschalten des Stromes wurde in Zelle 2 das Ausschwingverhalten über 5 Minuten analysiert.

Die Kurven sind in Figur 6 dargestellt. Tabelle 6 zeigt die gemessenen Ladungsmengen $Q_H$ sowie die daraus berechnete Menge an diffundiertem Wasserstoff.

Tabelle 6:

| Test | Beladungs-Elektrolyt | Ladungsmenge $Q_H$ mA·sec/3 cm$^2$ | Stoffmenge $n_H$ mol/3 cm$^2$ |
|---|---|---|---|
| 6-a | Alkalischer Zink-Elektrolyt + 0 mg/l Lugalvan® BPC 48 | 4,87 | 5,04*10$^{-8}$ |
| 6-b | Alkalischer Zink-Elektrolyt + 50 mg/l Lugalvan® BPC 48 | 3,09 | 3,20*10$^{-8}$ |

Ergebnisse:

Tabelle 6 kann entnommen werden, dass die Ladungsmenge $Q_H$ und somit auch die Menge an diffundiertem Wasserstoff mit Zugabe von Lugalvan® BPC 48 sinkt. Was das Ausschwingverhalten betrifft, so zeigt Figur 6, dass nach Ausschalten des Stroms ein langsamer Abfall des Elektronenflusses zu beobachten ist.

**Patentansprüche**

1. Verfahren zur elektrochemischen Messung von Wasserstoffpermeation durch ein metallisches oder metallisiertes Werkstück unter Einsatz einer Doppelzelle, die eine Beladezelle und eine Messzelle umfasst, welche galvanisch voneinander getrennt sind, und worin die Messzelle einen Elektrolyten und eine Sauerstoffelektrode aufweist, wobei die Sauerstoffelektrode eine Gasdiffusionselektrode ist, die eine gasdurchlässige, Elektrolyt-undurchlässige Membran aufweist, und
wobei das Verfahren die folgenden Schritte umfasst:

   (a) Einbringen des Werkstücks zwischen die Belade- und die Messzelle, so dass eine erste Oberfläche des Werkstücks mit der Beladezelle und die gegenüberliegende zweite Oberfläche des Werkstücks mit der Messzelle in Verbindung steht;
   (b) Durchführung einer Beladereaktion in der Beladezelle, um die erste Oberfläche des Werkstücks mit Wasserstoff zu beladen, wobei das Beladen des Werkstücks mit Wasserstoff durch eine wasserstoffbildende Reaktion erfolgt, die durch eine Interaktion eines Elektrolyten mit der Werkstückoberfläche ermöglicht wird, ausgewählt aus einer Beizreaktion, einer Passivierungsreaktion, einer chemischen oder elektrochemischen Abscheidungsreaktion, einem Entschichtungsprozess, einer Ätzreaktion, Elektropolieren, einem Entfettungsprozess und einem simulierten Korrosionsprozess;

(c) Ermöglichen einer Redoxreaktion in der Messzelle ohne Anlegen einer externen Strom- bzw. Spannungsquelle, worin die zweite Oberfläche des Werkstücks als Anode fungiert, an der der in (b) gebildete und durch das Werkstück diffundierte Wasserstoff oxidiert wird, und die Sauerstoffelektrode als Kathode fungiert, an der Sauerstoff reduziert wird, wobei ein Elektronenfluss über einen elektrischen Leiter zwischen Anode und Kathode und ein Ionenfluss über den Elektrolyten stattfindet;

(d) Messung des Elektronenflusses im elektrischen Leiter und Bestimmung der geflossenen Ladung;

(e) Ermittlung der Menge an diffundiertem Wasserstoff anhand der geflossenen Ladung.

2. Verfahren gemäß Anspruch 1, worin der Sauerstoff als Luftsauerstoff bereitgestellt wird.

3. Verfahren gemäß Anspruch 1 oder 2, worin die Beizreaktion aus einem alkalischen Beizen, sauren Beizen, neutralen Beizen oder elektrolytisch unterstützten Beizen ausgewählt ist.

4. Verfahren gemäß Anspruch 1 oder 2, worin die Abscheidungsreaktion aus einer chemischen oder elektrochemischen Zinkbeschichtung, Nickelbeschichtung, Cadmiumbeschichtung, Hartchrombeschichtung, Glanzchrombeschichtung, Edelmetallbeschichtungen, insbesondere Gold-, Palladium-, Platin- oder Silberbeschichtungen sowie Legierungsbeschichtungen, wie Zink-Nickel oder Zink-Eisen und Kombinationen aus mehreren der vorgenannten Beschichtungen ausgewählt ist.

5. Verfahren gemäß Anspruch 1 oder 2, worin die Passivierungsreaktion ein Phosphatieren, Chromatieren, Brünieren oder Anodisieren ist.

6. Verfahren gemäß einem der Ansprüche 1-5, worin das Werkstück aus Eisen, Titan, Tantal, Vanadium, Zirkon, Niob, Aluminium, Nickel sowie Legierungen von diesen hergestellt ist.

7. Verwendung einer Vorrichtung zur elektrochemischen Messung von Wasserstoffpermeation durch ein metallisches oder metallisiertes Werkstück gemäß des Verfahrens nach einem der Ansprüche 1-6, wobei die Vorrichtung eine Doppelzelle mit einer Beladezelle, einer von der Beladezelle galvanisch getrennten Messzelle und einem Zwischenraum zwischen Beladezelle und Messzelle umfasst,

worin der Zwischenraum für die Aufnahme des Werkstücks vorgesehen ist, so dass eine erste Oberfläche des Werkstücks mit der Beladezelle und die gegenüberliegende zweite Oberfläche des Werkstücks mit der Messzelle in Verbindung steht,

worin die Beladezelle für die Durchführung einer Beladereaktion eingerichtet ist, um die erste Oberfläche des Werkstücks mit Wasserstoff zu beladen;

und die Messzelle einen Elektrolyten und eine Sauerstoffelektrode als Kathode aufweist, wobei die Sauerstoffelektrode eine Gasdiffusionselektrode ist, die eine gasdurchlässige, Elektrolyt-undurchlässige Membran aufweist, und die zweite Oberfläche des Werkstücks als Anode vorgesehen ist; und

worin Kathode und Anode über einen elektrischen Leiter verbunden sind, der mit einer Strommesseinrichtung versehen ist.

8. Verwendung gemäß Anspruch 7, worin die Beladezelle und/oder Messzelle mit einer Bezugselektrode und einer Potentialmesseinrichtung versehen ist/sind, um das Potential des Werkstücks zu bestimmen.

## Claims

1. Method for electrochemical measurement of hydrogen permeation though a metallic or metallised workpiece using a double cell which comprises a loading cell and a measuring cell which are electrically isolated from one another, and wherein the measuring cell has an electrolyte and an oxygen electrode, wherein the oxygen electrode is a gas diffusion electrode having a gas-permeable, electrolyte-impermeable membrane, and wherein the method comprises the following steps:

(a) introducing the workpiece between the loading cell and the measuring cell, so that a first surface of the workpiece is in contact with the loading cell and the opposite second surface of the workpiece is in contact with the measuring cell;

(b) carrying out a loading reaction in the loading cell in order to load the first surface of the workpiece with hydrogen, wherein the loading of the workpiece with hydrogen is effected though a hydrogen-forming reaction which is made possible through an interaction of an electrolyte with the workpiece surface, selected from a pickling reaction, a passivation reaction, a chemical or electrochemical deposition reaction, a decoating process, an etching reaction, electropolishing, a degreasing process and a simulated corrosion process;

(c) enabling a redox reaction in the measuring cell without applying an external current or voltage source, wherein the second surface of the workpiece functions as an anode at which the hydrogen formed in (b) and diffused through the workpiece is oxidised, and the oxygen electrode functions as a cathode at which oxygen is reduced, wherein a flow of electrons takes place via an electrical conductor between the anode and cathode and a flow of ions takes place via the electrolyte;

(d) measuring the electron flow in the electrical conductor and determining the charge that has flowed;

(e) determining the amount of diffused hydrogen on the basis of the charge that has flowed.

2. Method according to claim 1, wherein the oxygen is provided as atmospheric oxygen.

3. Method according to claim 1 or 2, wherein the pickling reaction is selected from an alkaline pickling, acidic pickling, neutral pickling or electrolytically assisted pickling.

4. Method according to claim 1 or 2, wherein the deposition reaction is selected from a chemical or electrochemical zinc coating, nickel coating, cadmium coating, hard chrome coating, bright chrome coating, precious metal coatings such as gold, palladium, platinum or silver coatings and alloy coatings such as zinc-nickel or zinc-iron and combinations of several of the aforementioned coatings.

5. Method according to claim 1 or 2, wherein the passivation reaction involves phosphating, chromating, burnishing or anodising.

6. Method according to one of the claims 1-5, wherein the workpiece is made of iron, titanium, tantalum, vanadium, zirconium, niobium, aluminium, nickel and alloys thereof.

7. Use of a device for electrochemical measurement of hydrogen permeation through a metallic or metallised workpiece using the method according to one of the claims 1-6, wherein the device comprises a double cell with a loading cell, a measuring cell which is electrically isolated from the loading cell and a gap between the loading cell and the measuring cell,

wherein the gap is provided to receive the workpiece, so that a first surface of the workpiece is in contact with the loading cell and the opposite second surface of the workpiece is in contact with the measuring cell, wherein the loading cell is configured to perform a loading reaction in order to load the first surface of the workpiece with hydrogen; and the measuring cell has an electrolyte and an oxygen electrode as cathode, wherein the oxygen electrode is a gas diffusion electrode having a gas-permeable, electrolyte-impermeable membrane, and the second surface of the workpiece is provided as an anode; and wherein the cathode and anode are connected via an electrical conductor which is provided with a current measuring device.

8. Use according to claim 7, wherein the loading cell and/or measuring cell is/are provided with a reference electrode and a potential measuring device in order to determine the potential of the workpiece.

## Revendications

1. Procédé de mesure électrochimique de perméation d'hydrogène à travers une pièce métallique ou métallisée utilisant une cellule double, qui comprend une cellule de chargement et une cellule de mesure, lesquelles sont séparées galvaniquement l'une de l'autre, et dans lequel la cellule de mesure présente un électrolyte et une électrode à oxygène, dans lequel l'électrode à oxygène est une électrode à diffusion gazeuse, qui présente une membrane perméable au gaz et imperméable à l'électrolyte, et dans lequel le procédé comprend les étapes suivantes consistant à :

(a) introduire la pièce entre la cellule de chargement et la cellule de mesure de sorte qu'une première surface de la pièce soit en connexion avec la cellule de chargement et que la seconde surface opposée de la pièce soit en connexion avec la cellule de mesure ;

(b) réaliser une réaction de chargement dans la cellule de chargement pour charger de l'hydrogène sur la première surface de la pièce, dans lequel le chargement d'hydrogène sur la pièce est effectué par une réaction de formation d'hydrogène qui est permise par une interaction d'un électrolyte avec la surface de pièce, sélectionnée parmi une réaction de décapage, une réaction de passivation, une réaction de dépôt chimique ou électrochimique, un processus de décapage, une réaction caustique, un électropolissage, un processus de dégraissage et un processus de corrosion simulé ;

(c) permettre une réaction d'oxydoréduction dans la cellule de mesure sans appliquer une source de courant ou de tension externe, dans lequel la seconde surface de la pièce agit en tant qu'anode à laquelle l'hydrogène formé en (b) et diffusé à travers la pièce est oxydé, et l'électrode à oxygène agit en tant que cathode à laquelle l'oxygène est réduit, dans lequel un flux d'électrons se produit à travers un conducteur électrique entre l'anode et la cathode et un flux d'ions se produit à travers l'électrolyte ;

(d) mesurer le flux d'électrons dans le conducteur électrique et déterminer la charge écoulée ;

(e) déterminer la quantité d'hydrogène diffusée à l'aide de la charge écoulée.

2. Procédé selon la revendication 1, dans lequel l'oxygène est fourni sous forme d'oxygène atmosphérique.

3. Procédé selon la revendication 1 ou 2, dans lequel la réaction de décapage est sélectionnée parmi un décapage alcalin, un décapage acide, un décapage neutre ou un décapage assisté par électrolyse.

4. Procédé selon la revendication 1 ou 2, dans lequel la réaction de dépôt est sélectionnée parmi un revêtement chimique ou électrochimique de zinc, un revêtement de nickel, un revêtement de cadmium, un revêtement de chrome dur, un revêtement de chrome brillant, des revêtements de métaux précieux, en particulier des revêtements d'or, de palladium, de platine ou d'argent, ainsi que des revêtements d'alliage, tels que du zinc-nickel ou du zinc-fer, et des combinaisons de plusieurs des revêtements susmentionnés.

5. Procédé selon la revendication 1 ou 2, dans lequel la réaction de passivation est une phosphatation, une chromatation, un brunissage ou une anodisation.

6. Procédé selon l'une quelconque des revendications 1-5, dans lequel la pièce est en fer, titane, tantale, vanadium, zirconium, niobium, aluminium, nickel ainsi que leurs alliages.

7. Utilisation d'un dispositif de mesure électrochimique de perméation d'hydrogène à travers une pièce métallique ou métallisée selon le procédé de l'une quelconque des revendications 1-6, dans lequel le dispositif comprend une cellule double avec une cellule de chargement, une cellule de mesure séparée galvaniquement de la cellule de chargement et un espace intermédiaire entre la cellule de chargement et la cellule de mesure,

dans lequel l'espace intermédiaire est prévu pour recevoir la pièce de sorte qu'une première surface de la pièce soit en connexion avec la cellule de chargement et que la seconde surface opposée de la pièce soit en connexion avec la cellule de mesure,

dans lequel la cellule de chargement est configurée pour réaliser une réaction de chargement pour charger de l'hydrogène sur la première surface de la pièce ;

et la cellule de mesure présente un électrolyte et une électrode à oxygène en tant que cathode, dans lequel l'électrode à oxygène est une électrode à diffusion gazeuse qui présente une membrane perméable au gaz et imperméable à l'électrolyte, et la seconde surface de la pièce est prévue en tant qu'anode ; et

dans lequel la cathode et l'anode sont connectées par un conducteur électrique qui est doté d'un dispositif de mesure du courant.

8. Utilisation selon la revendication 7, dans laquelle la cellule de chargement et/ou la cellule de mesure est/sont dotée(s) d'une électrode de référence et d'un dispositif de mesure de potentiel pour déterminer le potentiel de la pièce.

Figur 1:

Zelle 2, Oxidationsstrom

Figur 2:

Figur 3:

Zelle 2, Oxidationsstrom

Figur 4:

Zelle 2, Oxidationsstrom

Figur 5:

Zelle 2, Oxidationsstrom

Figur 6:

Zelle 2, Oxidationsstrom

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015090571 A1
- DE 102013021771 A1
- EP 0994347 A2

**In der Beschreibung aufgeführte Nicht-Patentliteratur**

- **METALLEN: M. A. V. DEVANATHAN ; Z. STACHURSKI.** The Mechanism of Hydrogen Evolution on Iron in Acid Solutins by Determination of Permeation Rates. *J. Electrochem. Society,* 1964, vol. 111 (5), 619-623
- **J.P.D. CARVALHO et al.** *International Journal of Hydrogen Energy,* 2017, vol. 42 (1), 681